# EUROPEAN PATENT APPLICATION

(11) **EP 1 773 047 A2**
(43) Date of publication of application: **11.04.2007**
(21) Application number: 06121832.7
(22) Date of filing: 05.10.2006
(51) Int. Cl.: H04N 5/445

(54) **Display Apparatus And Contents Information Display Method**

(30) Priority: 08.10.2005 KR 20050094670
(71) Applicant: Samsung Electronics Co., Ltd., Suwon-si Gyeonggi-do (KR)
(72) Inventor: Pak, Sung-youn, , Seoul (KR); Yun, Young-hwa, , Seoul (KR)
(74) Representative: Perkins, Dawn Elizabeth

(57) **Abstract**

A contents information display method of a display apparatus includes storing mosaic display information related to a location and a size of a plurality of sub-screens which display a plurality of contents; receiving and storing contents information; extracting image data corresponding to respective contents of the plurality of contents from the stored contents information when a mosaic display function is selected; and adjusting the locations and the sizes of one or more sub-screens of the plurality of sub-screens according to a movement of a cursor based on the mosaic display information, and displaying the image data corresponding to respective sub-screens of the plurality of sub-screens.

## Description

Apparatuses and methods consistent with the present invention relate to a display apparatus and a contents information display method, and more particularly, to a display apparatus for displaying various contents on a single screen, and a contents display method.

In general, when a user wants to search for a plurality of stored contents and display or reproduce desired contents in a display apparatus, the user often selects the desired contents using contents information displayed in the form of a list. In most cases, the contents information is displayed as text.

Accordingly, to select the desired content, the user opens the contents one by one by manipulating a remote controller or a mouse, which is an inconvenient search. For instance, the electronic program guide (EPG) having the program guide information is commercially available in the recent broadcasting services. As a television receives and displays the EPG information on a screen, the user can easily search for his/her desired broadcast program information.

However, typically, the display of the EPG information is disadvantageous in that it is hard to arrange a great deal of the broadcast program information on the restricted screen. Hence, mostly, the EPG information is text-oriented pages for the search. But, the user cannot perceive the desired information in one look.

Accordingly, it is an aspect of the present invention to provide a display apparatus and a contents display method, in which video data corresponding to respective contents is arranged and displayed on a plurality of sub-screens as mosaic images, thereby allowing a user to easily search the contents.

The foregoing and/or other aspects of the present invention can be achieved by providing a contents information display method of a display apparatus, comprising: storing mosaic display information related to location and size of a plurality of sub-screens which display a plurality of contents; receiving and storing contents information; extracting image data corresponding to respective contents of the plurality of contents from the stored contents information when a mosaic display function is selected; and adjusting the locations and the sizes of one or more sub-screens of the plurality of sub-screens according to a movement of a cursor based on the mosaic display information, and displaying the image data corresponding to respective sub-screens of the plurality of sub-screens.

According to an aspect of the invention, the contents information display method further comprises: displaying brief information related to contents corresponding to a sub-screen of the plurality of sub-screens where the cursor is positioned, on an area of a screen of the display apparatus.

According to an aspect of the invention, the displaying the image data corresponding to the respective sub-screens comprises displaying the sub-screen where the cursor is positioned and one or more sub-screens adjacent thereto in a size larger than other sub-screens.

According to an aspect of the invention, the displaying the image data corresponding to the respective sub-screens comprises displaying the sub-screen where the cursor is positioned and the one or more sub-screens adjacent thereto in the same size.

According to an aspect of the invention, the displaying the image data corresponding to the respective sub-screens comprises displaying other sub-screens except the sub-screen where the cursor is positioned and the one or more sub-screens adjacent thereto in a size smaller than the sub-screen where the cursor is positioned.

According to an aspect of the invention, the contents information comprises broadcast program guide information.
According to an aspect of the invention, the image data corresponding to the respective contents comprises thumbnail data corresponding to respective programs.

According to an aspect of the invention, the brief information of the content comprises at least one of a channel number, a channel name, a title and a broadcast time of a program corresponding to the sub-screen.
According to an aspect of the invention, the displaying the image data corresponding to the respective sub-screens comprises tuning and real-playing a broadcast signal corresponding to a channel of the sub-screen where the cursor is positioned.

According to an aspect of the invention, the displaying of the image data corresponding to the respective sub-screens comprises reproducing contents corresponding to the sub-screen where the cursor is positioned.

The foregoing and/or other aspects of the present invention can be achieved by providing a display apparatus which comprises a display part and a signal processor for processing and outputting a signal to the display part, the apparatus comprising: a contents information storage which stores information related to a plurality of contents; a display information storage which stores mosaic display information related to a location and a size of a plurality of sub-screens displaying the plurality of contents; a user selection part; and a controller which extracts image data corresponding to respective contents of the plurality of contents from the stored contents information when a mosaic display function is selected through the user selection part, and controls the signal processor to adjust the location and the size of one or more sub-screens of the plurality sub-screens according to a movement of a cursor based on the mosaic display information and to display the extracted image data corresponding to respective sub-screens of the plurality of sub-screens.

According to an aspect of the invention, the controller controls brief information related to the content to be displayed corresponding to a sub-screen where the cursor is positioned, on an area of a screen of the display apparatus.

According to an aspect of the invention, the controller displays the sub-screen where the cursor is positioned and one or more sub-screens adjacent thereto in a size larger than other sub-screens.

According to an aspect of the invention, the controller moves the cursor when the movement of the cursor is selected through the user selection part, and controls the signal processor to adjust the location and the size of the sub-screen where the cursor is positioned according to the movement of the cursor.

According to an aspect of the invention, the controller, when the cursor moves, controls the signal processor to display the sub-screen where the cursor is positioned and the one or more sub-screens adjacent thereto in the same size.

According to an aspect of the invention, the controller, when the cursor moves, controls the signal processor to display other sub-screens except the sub-screen where the cursor is positioned and the one or more sub-screens adjacent thereto, in a size smaller than the sub-screen where the cursor is positioned.

According to an aspect of the invention, the display apparatus further comprises: a broadcast receiver which receives a broadcast signal, wherein the contents information comprises broadcast program guide information, and the image data corresponding to the respective contents comprises thumbnail data corresponding to respective programs.

According to an aspect of the invention, the brief information related to the content includes at least one of a channel number, a channel name, a title, and a broadcast time of a program corresponding to the thumbnail data pointed by the cursor. According to an aspect of the invention, the controller controls the signal processor to receive a broadcast signal corresponding to a channel of the sub-screen where the cursor is positioned and real-play the broadcast signal on the display part.

According to an aspect of the invention, the controller controls the signal processor to reproduce contents corresponding to the sub-screen where the cursor is positioned.

The above and/or other aspects of the present invention will become apparent and more readily appreciated from the following description of the exemplary embodiments, taken in conjunction with the accompany drawings, in which:
Figure 1 is a block diagram of a television according to an exemplary embodiment of the present invention;
Figures 2A and 2B are diagrams illustrating a mosaic EPG screen displayed on the display part of Figure 1, and a sub-screen display method, respectively; and
Figure 3 is a flowchart outlining a mosaic EPG screen display method of the TV of Figure 1.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

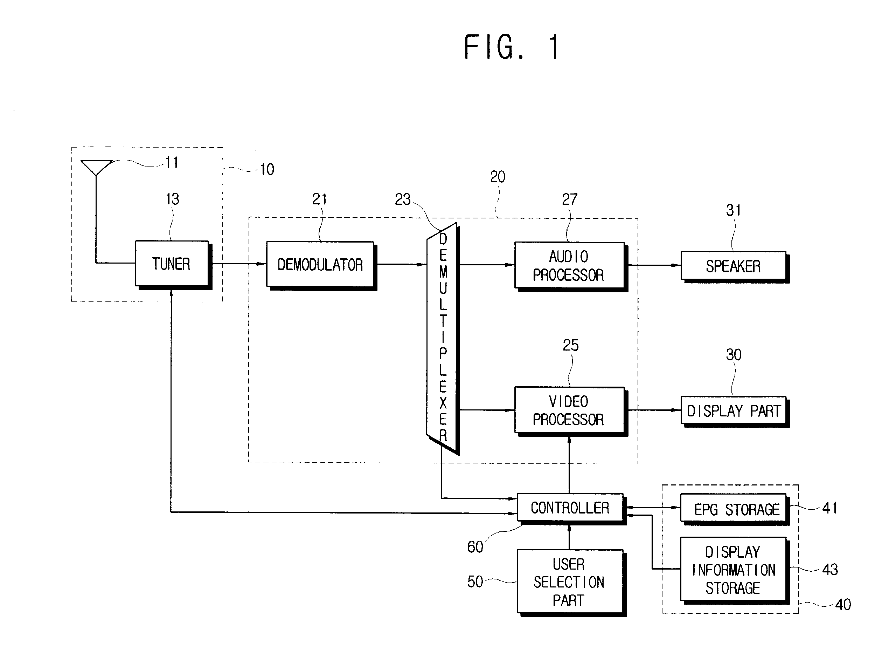

Figure 1 is a block diagram of a television according to an exemplary embodiment of the present invention. Herein, the exemplary embodiment of the present invention exemplifies a digital TV which receives and processes a digital broadcast signal.

Referring first to Figure 1, the TV includes a broadcast receiver 10, a signal processor 20, a display part 30, a speaker 31, a data storage part 40, a user selection part 50, and a controller 60.

The broadcast receiver 10 includes an antenna 11 and a tuning part 13. The signal processor 20 includes a demodulator 21, a demultiplexer 23, a video processor 25, and an audio processor 27. The data storage part 40 includes an EPG storage 41 and a display information storage 43.

The tuning part 13 is implemented using a tuner which tunes a broadcast signal received via the antenna 11. The tuning part 13 is able to tune a broadcast signal having a frequency band corresponding to a control signal of the controller 60, to be explained later.

The digital broadcast signal of the tuned channel passes through a vestigial sideband (VSB) demodulation process and an error correction process in the demodulator 21, and then is output as a transport stream. The demultiplexer 23 separates the transport stream into a video signal, an audio signal, and various additional data that is defined as Program and System Information Protocol (PSIP) information, and outputs a bit stream.

The video processor 25 processes and outputs the separated video signal output from the demultiplexer 23, in conformity with the specification of the display part 30. The separated audio signal is decoded by an audio decoder (not shown) and output to the speaker 31.

The video processor 25 includes a video decoder (not shown) which decodes the video data separated by the demultiplexer 23, and a scaler (not shown) which converts the decoded video signal to have the vertical frequency, the resolution, the aspect ratio and the like of the output specification of the display part 30. The video processor 25 can have a user interface (UI) generator which generates various UI menus providing a cursor and/or a highlight indicator.

The display part 30 is applicable to a variety of display modules such as digital light processing (DLP), liquid crystal display (LCD), plasma display panel (PDP) and so on.

The various additional data of the PSIP separated at the demultiplexer 23 contains the EPG information that is the guide information related to programs. The received EPG information is stored in the EPG storage 41 under the control of the controller 60, which will be explained below.

Herein, the EPG information contains information related to a system time table (STT), a master guide table (MGT), a virtual channel table (VCT), a rating region table (RRT), an event information table (EIT), and an extended text table (ETT). The EPG information includes thumbnail data of the respective programs. The thumbnail data is data related to a preview screen of the program.

The display information storage 43 stores information related to a location and a size of the sub-screen displaying the thumbnail data of the program. The location and the size of the sub-screen are determined and adjusted on the basis of the information stored in the display information storage 43. The information related to the location and the size of the sub-screen may be programmed in the display information storage 43 when the product is manufactured.

The user selection part 50 allows the user to select a mosaic EPG display function and to select a position of a cursor pointing the sub-screen which displays the content. The user selection part 50 may include menu keys provided in a remote controller, and a key signal generator which generates a key signal corresponding to the key manipulation. Note that the user selection part 50 can be implemented using a mouse and a keyboard, or a panel of the TV body.

When the mosaic EPG display function is selected through the user selection part 50, the controller 60 controls the signal processor 20 to generate a mosaic EPG screen by extracting the thumbnail data corresponding to the respective programs from the EPG information stored in the EPG storage 41. In doing so, the controller 60 controls the signal processor 20 to adjust the location and the size of the sub-screens included in the mosaic EPG screen by referring to the information related to the location and the size of the sub-screens that display the thumbnail data stored in the display information storage 43.

The controller 60 may control the contents on the mosaic EPG screen to represent all of future programs that will be broadcasted in 12 hours or 24 hours from a current time. Based on the time selection, the size and the location of the sub-screens displayed on the mosaic EPG screen are adjusted. Here, a user can select the time using the user selection part 50.

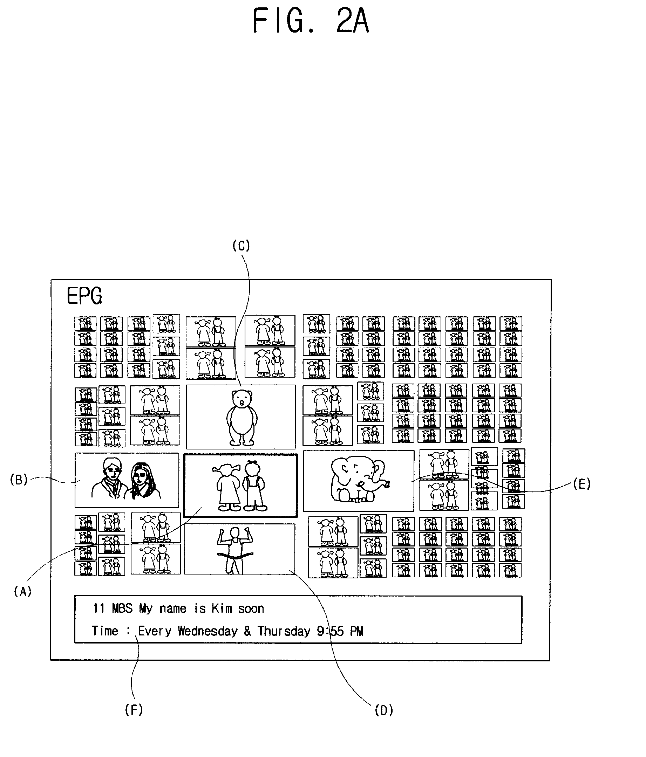

It is to be understood that the mosaic EPG screen may be generated according to a genre of the contents, such as movie, soap opera, sports, and so on.
Hereafter, descriptions are provided on an example of the mosaic EPG screen generated by the signal processor 20 under the control of the controller 60, in reference to Figure 2A.

Referring to Figure 2A, a sub-screen A at which the cursor is pointing, and sub-screens C, D, B and E adjacent to and above, below, on the left side and on the right side of the sub-screen A are generated in the same size, and other sub-screens are generated in the size smaller than that of the sub-screen A.

Thus, the user can perceive the plurality of contents on one screen at one look. Particularly, the contents on the adjacent sub-screens around the sub-screen at which the cursor is pointing are displayed relatively large so that the user can easily recognize the up, down, left, and right contents of the content indicated by the cursor. Hence, this helps the user to select the desired content by moving the cursor. All other sub-screens except the selected sub-screen and the adjacent sub-screens there around are different in size according to the positions of the cursor as shown in Figure 2A, but not limited thereto. Alternatively, the size of the other sub-screens may be set to have the same size.

Still referring to Figure 2A, brief information F of the content corresponding to the sub-screen A where the cursor is currently positioned, can be displayed as a text at the bottom of the mosaic EPG. For instance, the brief information may contain a channel number, a channel name, a program title, a time, and the like of a broadcast program. Therefore, the user can obtain information in addition to the content image displayed on the sub-screen.

When it is possible to real-play the content of the sub-screen A where the cursor is positioned, the controller 60 controls to tune the corresponding channel, and thus real-plays the program. Further, the program of the adjacent sub-screens may be also real-played when the TV has a picture-in-picture (PIP) function.

Meanwhile, the controller 60 controls the cursor to move according to vertical (up and down) and horizontal (left and right) movement selections of the user selection part 50, and controls the signal processor 20 to change the location and the size of the displayed sub-screens depending on the movement of the cursor.

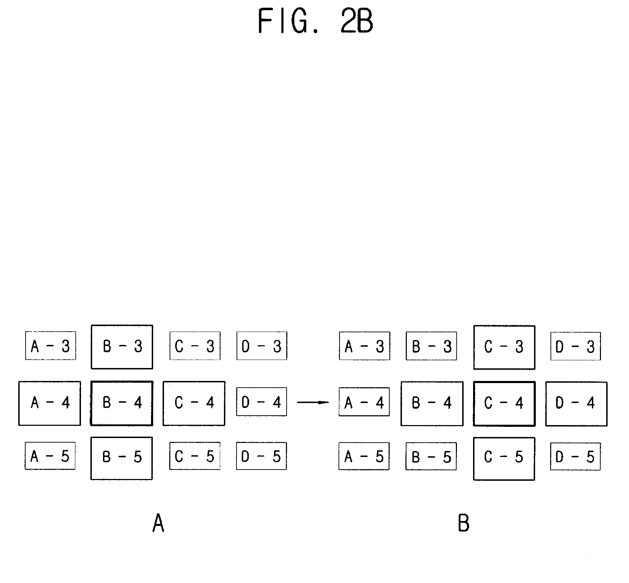

The change in the location and the size of the displayed sub-screens depending on the movement of the cursor is explained in further detail in reference to Figure 2B. Figure 2B simply depicts a part of the mosaic EPG screen with respect to the cursor. Referring to Figure 2B, as the cursor moves from B-4 to C-4, the screen A is changed to the screen B.

As mentioned earlier, in the screen A, the sub-screen B-4 where the cursor is positioned, and the vertically and horizontally adjacent sub-screens A-4, B-3, B-5 and C-4 are displayed in the same size, while other sub-screens A-3, A-5, C-3, C-5,... are displayed in the smaller size than the sub-screen and the adjacent screens. Note that the other sub-screens A-3, A-5, C-3, C-5,..., excluding the sub-screen B-4 and the adjacent sub-screens , may have the same or different size.

In the screen B, as the cursor moves rightward from B-4 to C-4, the sub-screens A-4, B-3, and B-5 become smaller while the sub-screens C-3, C-5 and D-4 become larger.

The line and the column of the sub-screens may change according to the movement of the cursor. For instance, when the cursor moves from a first column to a second column, since the number of the sub-screens displayable in the second column is decreased, other sub-screens originally located in the second column can be shifted to and displayed in the first column. Note that the sub-screen located in the second column may be adjusted to have a relatively small size, rather than moving the contents thereof to any other column. In the mosaic EPG screen, the adjustment for the size and the location of the sub-screens based on the movement of the cursor can be variously set by programming.

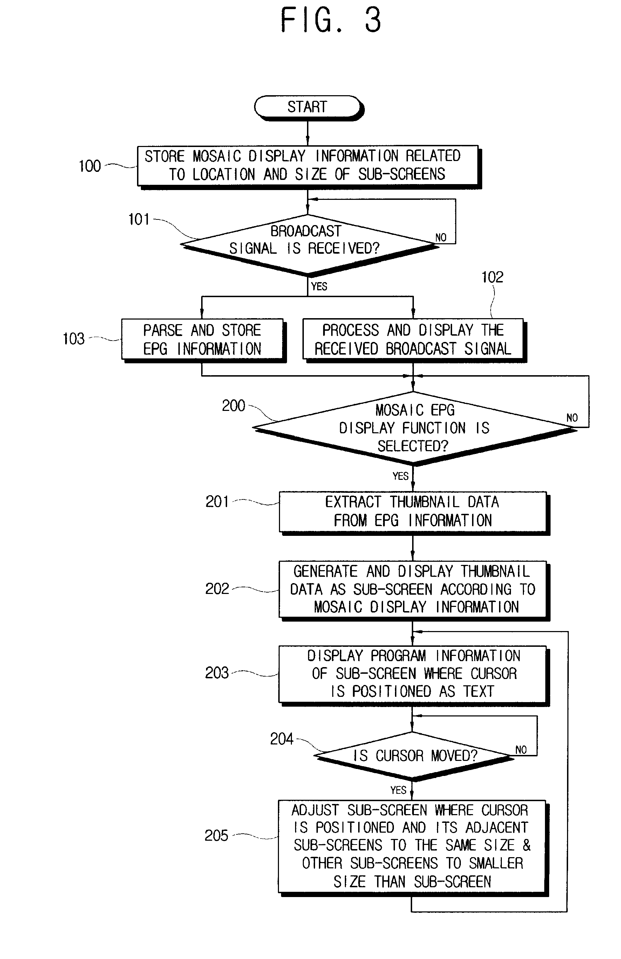

According to an exemplary embodiment of the present invention, a mosaic EPG screen display method is now described in reference to Figure 3.

The display information storage 43 of the TV stores the display information related to the location and the size of the respective displayed sub-screens included in the mosaic EPG screen at operation 100. The display information may be programmed at a manufacture phase.

When the TV is turned on and a specific channel is tuned according to the broadcast reception function, the broadcast signal of the specific channel is received at operation 101. The controller 60 controls the TV to tune to the specific channel according to the channel selection signal of the user selection part 50, controls the signal processor 20 to process the tuned broadcast signal, and controls the display part 30 to display the processed signal at operation 120.

The controller 60 parses the EPG information based on the PSIP separated by the demultiplexer 23 and stores the parsed EPG information in the EPG storage 41 at operation 103.

When the mosaic EPG screen display function is selected through the user selection part 50 at operation 200, the controller 60 extracts the thumbnail data of the programs from the EPG storage 41 at operation 201 and provides the extracted thumbnail data to the signal processor 20. Next, the controller 60 controls the signal processor 20 to generate the mosaic EPG screen based on the mosaic display information related to the location and the size of the displayed sub-screens stored in the display information storage 43, and controls to display the mosaic EPG screen on the display part 30 at operation 202.

In doing so, the sub-screen where the cursor is positioned and its adjacent sub-screens are generated in the same size, and the other sub-screens may be generated in a smaller size than the sub-screen where the cursor is positioned. In the case that it is possible to real-play the contents of the sub-screen where the cursor is positioned, the corresponding channel is tuned and displayed for the real-play. The brief information related to the contents on the sub-screen where the cursor is positioned is extracted from the EPG storage 41, and the signal processor 20 is controlled to generate the corresponding data as the text and to display the text on the display part 30 at operation 203. Hence, the user can perceive the brief information related to the content on the sub-screen where the cursor is positioned. When the cursor moves at operation 204, the sub-screen where the cursor is positioned and its adjacent sub-screens are adjusted to have the same size, and the other sub-screens are adjusted to have the smaller size than the sub-screen where the cursor is positioned at operation 205. Next, the contents information about the sub-screen where the cursor is positioned is displayed as text according to the movement of the cursor at operation 203.

Since the size and the location of the sub-screens on the mosaic EPG screen are variously adjustable according to the movement of the cursor, the user can obtain the contents information from the mosaic EPG screen dynamically displayed. Although the present invention exemplifies the TV as the display apparatus, any other display apparatuses can be employed. In addition, although the EPG information is the example of the contents information in the exemplary embodiment of the present invention, diverse contents such as a photograph, moving picture and the like can be applicable.

As set forth above, the display apparatus and the contents display method according to an exemplary embodiment of the present invention arrange and display the image data corresponding to the respective contents on a plurality of sub-screens as the mosaic images. Therefore, the user can easily search for his/her desired content. Although a few exemplary embodiments of the present invention have been shown and described, it will be appreciated by those skilled in the art that changes may be made in these exemplary embodiments without departing from the scope of the invention as defined in the appended claims.

## Claims

1. A display apparatus comprising:
a display part (30);
a signal processor (20) configured to process and output a signal to the display part (30);
a contents information storage (41) which stores information related to a plurality of contents;
a display information storage (43) which stores mosaic display information related to locations and sizes of a plurality of sub-screens displaying the plurality of contents;
a user selection part (50); and
a controller (60) configured to extract image data corresponding to respective contents of the plurality of contents from the stored contents information when a mosaic display function is selected through the user selection part (50), and control the signal processor (20) to adjust a location and size of a sub-screen of the plurality of sub-screens according to a movement of a cursor based on the mosaic display information and to display the extracted image data corresponding to a respective sub-screen of the plurality of sub-screens.

2. The display apparatus according to claim 1, wherein the controller (60) moves the cursor when the movement of the cursor is selected through the user selection part (50), and controls the signal processor (20) to adjust the location and the size of the sub-screen where the cursor is positioned according to the movement of the cursor.

3. The display apparatus according to claim 2, wherein the controller (60) displays the sub-screen where the cursor is positioned and one or more sub-screens adjacent thereto in a size larger than other sub-screens.

4. The display apparatus according to claim 2 or 3, wherein the controller (60), when the cursor moves, controls the signal processor (20) to display the sub-screen where the cursor is positioned and the one or more sub-screens adjacent thereto in the same size.

5. The display apparatus according to claim 2, 3 or 4, wherein the controller (60), when the cursor moves, controls the signal processor (20) to display other sub-screens except the sub-screen where the cursor is positioned and the one or more sub-screens adjacent thereto, in a size smaller than the sub-screen where the cursor is positioned.

6. The display apparatus according to any one of the preceding claims, wherein the controller (60) is configured to control brief information related to content corresponding to a sub-screen of the plurality of sub-screens where the cursor is positioned, on an area of a screen of the display part (30).

7. The display apparatus according to claim 6, further comprising:
a broadcast receiver (10) which receives a broadcast signal,
wherein the contents information comprises broadcast program guide information, and the image data corresponding to the respective contents comprises thumbnail data corresponding to respective programs.

8. The display apparatus according to claim 6 or 7, wherein the brief information related to the content includes at least one of a channel number, a channel name, a title, and a broadcast time of a program corresponding to thumbnail data pointed by the cursor.

9. The display apparatus according to claim 8, wherein the controller (60) is configured to control the signal processor (20)to receive a broadcast signal corresponding to a channel of the sub-screen where the cursor is positioned and real-play the broadcast signal on the display part (30).

10. The display apparatus according to any one of the preceding claims, wherein the controller (60) is configured to control the signal processor (20) to reproduce contents corresponding to the sub-screen where the cursor is positioned.

11. A display apparatus comprising:
a display part (30) having a screen;
a signal processor (20);
a contents information storage (41) which stores contents information relating to a plurality of items;
a display information storage (43) which stores mosaic display information related to locations and sizes on the screen of a plurality of sub-screens, each for displaying contents information relating to one of the plurality of items;
a user selection part (50); and
a controller (60) configured to, in response to selection of a mosaic display function through the user selection part (50), extract image data corresponding to each of the plurality of items from the stored contents information and display the image data in corresponding sub-screens and, in response to a movement of a cursor, to adjust a location and size of at least one sub-screen.

12. A display method, comprising:
storing mosaic display information related to location and sizes of a plurality of sub-screens which display a plurality of contents;
receiving and storing contents information;
extracting image data corresponding to respective contents of the plurality of contents from the stored contents information when a mosaic display function is selected; and
adjusting the location and the size of at least one sub-screen of the plurality of sub-screens according to a movement of a cursor based on the mosaic display information, and displaying the image data corresponding to respective sub-screens of the plurality of sub-screens.

13. The display method according to claim 12, wherein the displaying the image data corresponding to the respective sub-screens comprises displaying the sub-screen where the cursor is positioned and one or more sub-screens adjacent thereto in a size larger than other sub-screens.

14. The display method according to claim 12 or 13, wherein the displaying the image data corresponding to the respective sub-screens comprises displaying the sub-screen where the cursor is positioned and the one or more sub-screens adjacent thereto in the same size.

15. The display method according to claim 12, 13 or 14, wherein the displaying the image data corresponding to the respective sub-screens comprises displaying other sub-screens except the sub-screen where the cursor is positioned and the one or more sub-screens adjacent thereto in a size smaller than the sub-screen where the cursor is positioned.

16. The display method according to any one of claims 12 to 15, wherein the contents information comprises broadcast program guide information.

17. The display method according to claim 16, wherein the image data corresponding to the respective contents comprises thumbnail data corresponding to respective programs.

18. The display method according to any one of the preceding claims, further comprising:
displaying brief information related to contents corresponding to a sub-screen of the plurality of sub-screens where the cursor is positioned, on an area of a screen of the display apparatus.

19. The display method according to claim 18, wherein the brief information of the content corresponding to a sub-screen where the cursor is positioned comprises at least one of a channel number, a channel name, a title and a broadcast time of a program corresponding to the sub-screen where the cursor is positioned.

20. The display method according to claim 19, wherein the displaying the image data corresponding to the respective sub-screens comprises tuning and real-playing a broadcast signal corresponding to a channel of the sub-screen where the cursor is positioned.

21. The contents information display method according to any one of claims 12 to 20, wherein the displaying of the image data corresponding to the respective sub-screens comprises reproducing contents corresponding to the sub-screen where the cursor is positioned.
